Europäisches Patentamt

**European Patent Office**

**Office européen des brevets**

(11) Publication number: **0 044 602**

**A1**

(12) # EUROPEAN PATENT APPLICATION

(21) Application number: **81200831.6**

(22) Date of filing: **20.07.81**

(51) Int. Cl.³: **A 01 D 45/26**
**A 01 D 45/00**

(30) Priority: **21.07.80 NL 8004187**

(43) Date of publication of application:
**27.01.82 Bulletin 82/4**

(84) Designated Contracting States:
**BE DE FR GB NL**

(71) Applicant: **Backus Sormac B.V.**
**L.J. Costerstraat 16**
**NL-5916 PS Venlo(NL)**

(72) Inventor: **Backus, Stefanus Petrus**
**L.J. Costerstraat 16**
**Venlo(NL)**

(74) Representative: **Hoorweg, Petrus Nicolaas et al,**
**OCTROOIBUREAU ARNOLD & SIEDSMA Sweelinckplein**
**1**
**NL-2517 GK The Hague(NL)**

(54) **Raising device.**

(57) A device for raising cultured plants such as salad, endive, turnip-cabbage and so on, provided with a frame (1) on wheels (2) movable along the ground having skids and raising means (7) at the front and supporting racks (36) for grading boxes (37) at the rear side, an elevator belt (4) joining said raising means and being supported by the frame, said raising means are constructed in the form of raising members arranged pairwise and having rearwardly rising guide sides, below said sides a reciprocatorily driven saw or knife blade (13) extending transversely of the direction of movement is provided for.

FIG.1

EP 0 044 602 A1

Backus Sormac B.V. at Venlo, The Netherlands.


Raising device.

------------------------------------------------------------


The invention relates to a device for raising cultured plants such as salad, endive,turnip-cabbage and so on.

The invention has for its object to replace the classical, manual raising of such plants by a machine which can carry out this operation not only mechanically but als ergonomically.

The device is distinguished by a frame movable along the ground and having raising means at the front, an elevator belt joining said raising means and being supported by the frame.

By means of the elevator belt the operator gets the raised crop supplied at the correct height for his position so that he can fully concentrate his attention to sorting the raised crop. Apart from an enormous increase in productivity the invention thus provides a much easier check of the raising process by the operator.

In order to minimize loss of leaves of the crop the raising means are preferably constructed in the form of raising members arranged pairwise and having rearwardly rising guide sides. The guide side lifts the lowermost leaves of the plant before the plant is moved upwards to the elevator belt.

For given plants it is preferred to remove the root parts located in the ground simultaneously with the raising operation and for this purpose according to the invention curring or sawing means are provided below the guide sides of the raising members so that just below the lowermost leaves of the crop the stem or stalk is cut off. The cutting means are preferably formed by a reciprocatorily driven saw or knife blade extending transversely of the direction of movement. In this way a particularly simple driving and carrying structure of the saw blade is obtained, which may cover the full width of the machine.

In order to facilitate the manoevrability of the machine the frame is carried by one shaft having two ground wheels, whilst skids are arranged at the front of the frame. By means of these skids the height of the raising members with respect to the ground is accurately maintained, whilst the two ground wheels can readily manoever in narrow spaces as, for example, in greenhouses.

It is preferred to provide the frame on the rear side with supporting racks for holding packing material for the crop so that after having taken the lettuce heads or the like from the elevator belt the operator can directly deposit them in the desired grading box.

The foregoing and further features of the invention will be explained more fully in the following description of an embodiment with reference to the figures.

The drawing shows in

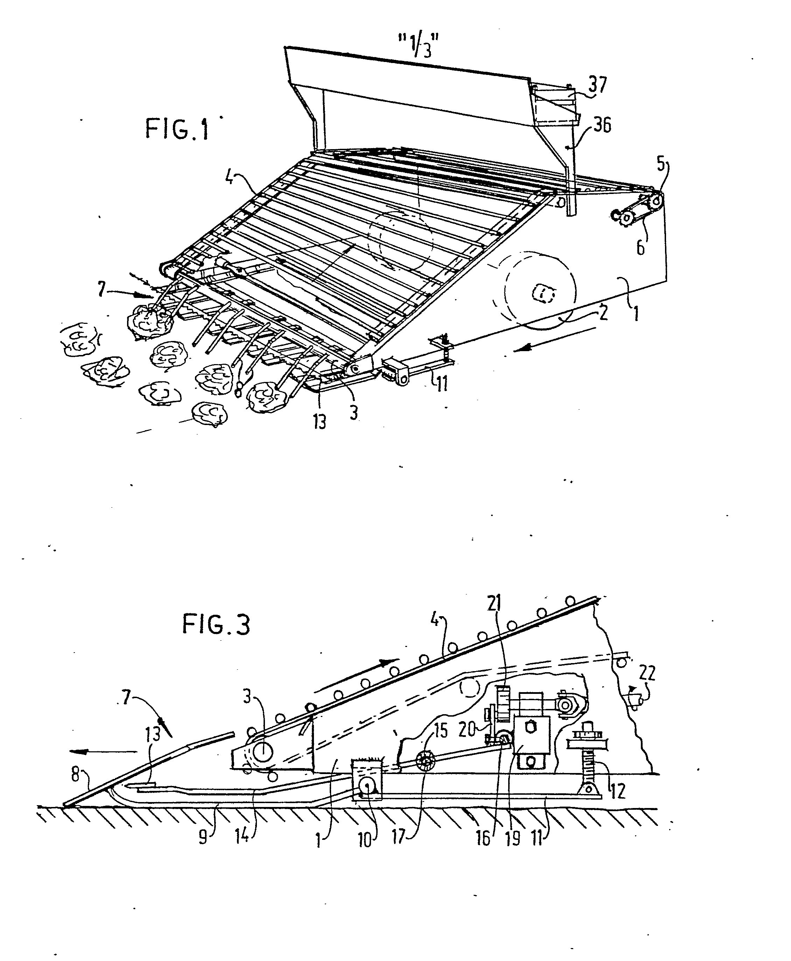

Figure 1 a perspective front view of the raising device embodying the invention,

Figure 2 a plan view of the device of figure 1,

Figure 3 a side elevation of part of the front side of the frame  with raising and cutting means arranged thereon.

Figure 4 a perspective front view of an alternative embodiment of the raising device.

Figure 5 a plan view of a pair of skids and cutting means.

The device illustrated in the figures mainly comprises a mobile frame 1 formed by two side plates interconnected by transverse beams so that a relatively flexible frame is obtained, which can readily match unevennesses of the ground.

The frame is supported by ground wheels 2, which are located inside the side plates of the frame.

The side plates of the frame are  inclined downwards to the front and terminate at the front just above the ground, where a reversing roller 3 for an elevator belt 4 is journalled. The elevator belt is formed by two parallel side belts, between which bars are fastened. The upper run of the belt 4 is upwardly inclined and has a sharp bend beyond the ground wheels so that the further part of the belt is slightly inclined downwards. Near the hindmost reversing roller 5 which is driven by a chain to be described hereinafter, the belt returns to the front side. With respect to the direction of movement a raising system is arranged in front of the reversing roller 3 and formed by raising members 7 arranged pairwise and formed each by a forwardly and downwardly inclined pin 8 fastened to the ascending front end of a skid 9. The skids 9 are connected at their rear ends with a transverse beam 10, the ends of which are journalled in the frame plates 1. A lever arm 11 extends from the transverse beam 10 to the rear and carries at the rear end a screw spindle 12, by means of which the lever 11 and hence the skids 9 can be adjusted and fixed in place respectively with respect to the frame plates 1.

Above the skids 9 extends a knife frame formed by a saw blade 13 extending behind and below the raising members 8 and by longitudinal bars 14 fastened to the ends of the saw blade and being interconnected on the rear side by two transverse bars 15 and 16 respectively. The bar 15 is held at both ends in a sliding bearing 17 on the inner side of each side plate 1, whereas the bar 16 is held in a sliding bearing 18 connected with a transverse beam 19 between the side plates 1. The transverse beam 19 is adjustable in a direction of height with respect to the side plates by means of elongated holes in which the bar 16 is displaceable with respect to the frame plates 1 in a direction of height and hence also the saw blade 13, since the knife frame tilts about the bar 15.

The bar 16 is pivotally connected with a crank rod 20, which is connected with a crank 21 rotably journalled in the beam 19 and being driven by the connecting rod 22.

A central driving motor 23 drives the connecting rod 22 through a gear box 24. The gear box 24 furthermore drive through a reducing box 25 the chain drive 6 of the elevator belt 4. Furthermore the ground wheels 2 are directly driven by the motor 23 via a rope transmission 26.

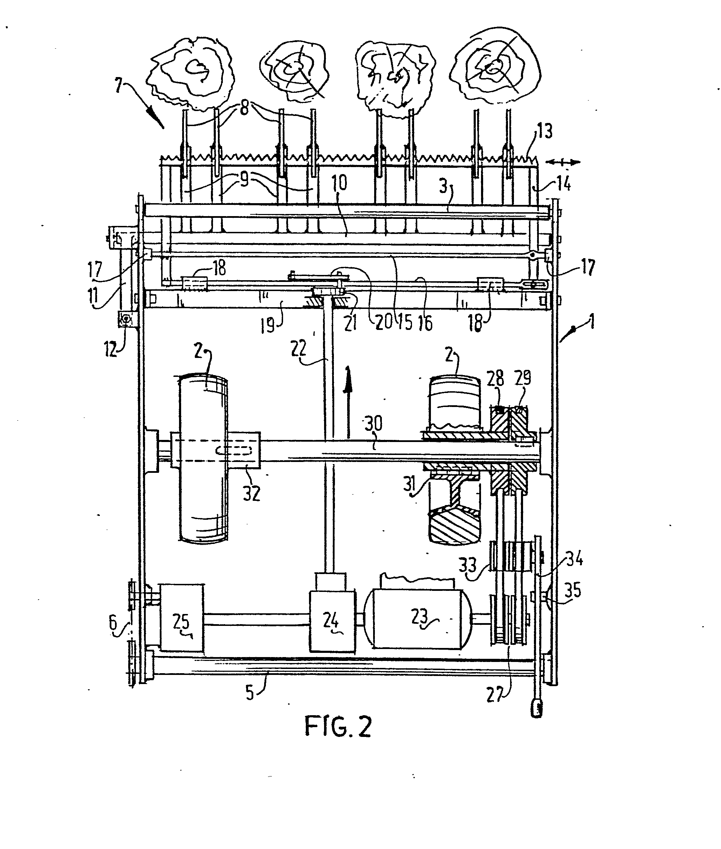

The engine 23 is provided for this purpose with a double rope wheel 27 for two ropes, each of which is passed to a rope wheel 28 and 29 respectively. The inner rope wheel 28 is rigidly connected with a sleeve 31, which is slidable and rotatable with respect to the running shaft 30 and on which the hub of the right-hand wheel 2 is rigidly seated. The right-hand rope wheel 29 is rigidly connected to a key joint with a running shaft 30, on which a sleeve 32 for the left-hand ground wheel 2 is non-rotatably, but slidably arranged (see fig. 2). A stretching wheel 33 is rotatably arranged on the end of a lever 34, which is pivotally journalled at 35 in the frame plate 1. At the other end the lever is provided with a handle by which the operator can move the stretching wheel 33 into or out of contact with the ropes. This arrangement has the advantage the user can cause the two wheels with the same speed in normal operation so that the device continues running straight on. When manoevering in narrow spaces, for example, in greenhouses the user can loosen the rope transmission so that the wheels are free to turn with respect to one another so that the device can be readily steered by hand.

The reducing boxes 24 and 25 ensure that the knife is comparatively slowly reciprocated via the crank mechanism 20, 21, the speed being such that wear of the cutter is hardly involved. The speed of the elevator belt slightly exceeds the running speed of the device so that clogging on the upper run of the belt cannot occur.

On the rear side of the device a supporting rack 36 is provided for packing material 37 so that after a check the operator can directly deposit the crop picked up from the downwardly inclined rear part of the belt 4 in the boxes 37 arranged on the supporting means 36.

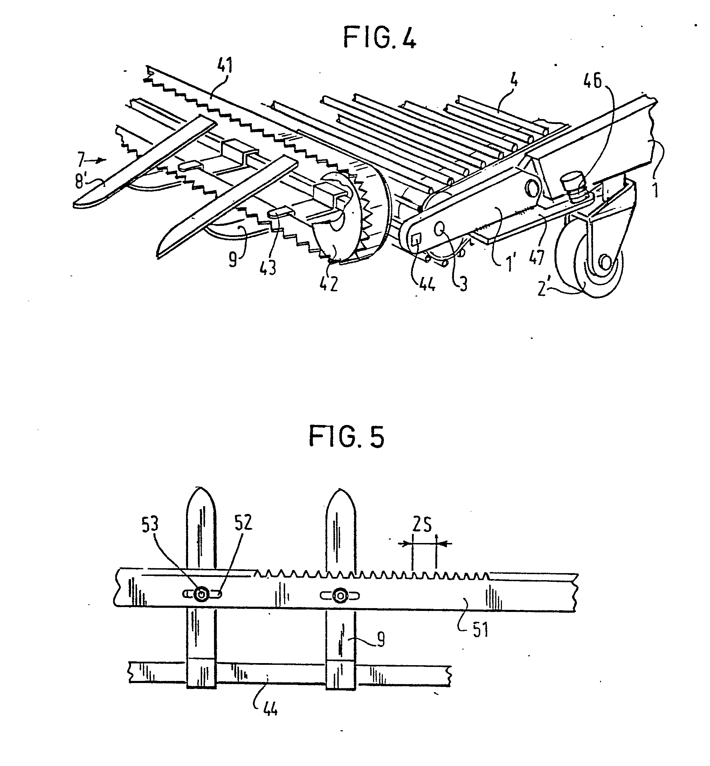

Fig. 4 shows an alternative enbodiment, in which the same reference numerals are related to the same parts as used in the previous figures.

Here the cutting means comprises a band-saw 41 slung around a returnroller 42 each located at both sides of the device, one of which is driven by a motor (not indicated in the figure). The active lower part of the saw is led underneath the raising member 8', here formed by platen, and above the skids 9. Each skid 9 is provided with a protuding lip 43, extending over the sawblade-part. The skid is non-rotatable, but shiftable mounted on a beam 44 having a square cross-section. Each skid is so adjustable to the width of the rows of crop, and moreover flexible in a vertical plane in order to flex according to a small ground-unevenness and independent to the other skids. The skids will hereby led the saw-blade accordingly.

The frame 1 is provided with front casters 2' in addition to the rear wheels 2 (not shown). In order to follow great differences in bottom contour the front part 1' of the frame 1 is pivotable in a vertical plane at the lying pivot axis 45. A spring 46 supported by frame 1 presses upon an lever 47 of the front part 1' and will balance the weight of said part with the attached members.

The device works like the device previous described.

Fig. 5 shows for the cutting means, a saw-blade 51 driven reciprocally and provided with ablong holes 52. The pin 53 attached to the skids 9 protudes through said holes, on which a washer and nut is attachable. Said pin-structure is similar to the lip-structure 43 in fig. 4 qua function. As the skids flex down- or upwards the saw-blade will flex too. The stroke-length of the reciprocable movement is preferably at least equal to twice the distance of the saw teeth in order to obtain an optimal cutting-action upon the crop-stem.

As a matter of course, the invention is not limited to the embodiment described above.

-----

WHAT IS CLAIMED IS:

1. A device for raising cultured plants such as lettuce, endive, turnip cabbage, characterized by a frame movable along the ground, raising means arranged at the front thereof and a driven elevator belt supported by the frame.

2. A device as claimed in claim 1, characterized in that the raising means are formed by raising members arranged pairwise and having rearwardly ascending guide sides.

3. A device as claimed in claims 1 and 2, characterized in that cutting or sawing means extend below the guide sides of the raising members.

4. A device as claimed in claims 1-3 characterized in that each raising member is provided with a skid.

5. A device as claimed in claim 4, characterized in that said cutting means, being an elongated saw-blade, is guided by said skid.

6. A device as claimed in claims 1 - 5 characterized in that the cutting means are formed by a saw blade driven in a reciprocatory manner transversely of the direction of movement, the stroke of which is at least equal to twice the distance of the saw teeth.

7. A device as claimed in claim 6, characterized in that the saw blade is carried by a rigid framework journalled in the frame so as to be slidable in a reciprocatory manner.

8. A device as claimed in anyone of the preceeding claims characterized in that the frame is supported near the rear side by means for example, ground wheels, whilst at the front the frame is supported by one or more skids.

9. A device as claimed in anyone of the preceeding claims characterized in that with respect to the raising members the cutting means are adjustable in a direction of height.

10. A device as claimed in anyone of the preceeding claims characterized in that with respect to the frame the raising members are adjustable in a direction of height.

11. A device as claimed in claim 8 characterized in that the track width of the ground wheels is adjustable.

12. A device as claimed in claim 8 characterized in that the drive of the ground wheels is performed through a manually stretched rope transmission.

13. A device as claimed in anyone of the preceeding claims characterized in that near the rear side the frame is provided with supporting racks for packing material, for example boxes.

-----

FIG.1

"1/3"

FIG.3

FIG. 2

"3/3"

## FIG. 4

## FIG. 5

**European Patent Office**

## EUROPEAN SEARCH REPORT

| Category | Citation of document with indication, where appropriate, of relevant passages | Relevant to claim |
|---|---|---|
| **DOCUMENTS CONSIDERED TO BE RELEVANT** | | |
| X | TRANSACTIONS OF THE ASAE, tome 17, no. 6, November-December 1974, American Society of Agricultural Engineers, St. JOSEPH, MICHIGAN (US) D.E. BOOSTER: "Mowing Method of Harvesting Strawberries", pages 1053-1055 | 1-3,5, 9,13 |
| | --- | |
| X | <u>GB - A - 1 508 693</u> (HECHT) | 1-3,5 |
| | * Page 2, lines 48-53; page 3, lines 19-39 * | |
| | --- | |
| | <u>US - A - 2 717 483</u> (HUME) | 1-3,5 |
| | * Column 1, line 54 to column 2, line 15 * | |
| | --- | |
| | <u>DE - A - 2 850 317</u> (VAN DEN TOP) | 5,7 |
| | * Page 8, lines 3-17; claim 2 * | |
| | --- | |
| | <u>US - A - 1 907 467</u> (TERVO) | 8,12, 13 |
| | * Page 1, line 41 to page 2, line 70; page 3, lines 19-24 * | |
| | --- | |
| | <u>US - A - 4 047 573</u> (AOYAMA) | 1,9 |
| | * Column 3, lines 20-32; claim 1 * | |
| | --- | |
| | ./.. | |

**CLASSIFICATION OF THE APPLICATION (Int. Cl.3)**

A 01 D 45/26
A 01 D 45/00

**TECHNICAL FIELDS SEARCHED (Int. Cl.3)**

A 01 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15.10.1981 | DE LAMEILLEURE |

EPO Form 1503.1 06.78

European Patent Office

**EUROPEAN SEARCH REPORT**

| | **DOCUMENTS CONSIDERED TO BE RELEVANT** | | CLASSIFICATION OF THE APPLICATION (Int. Cl.³) |
|---|---|---|---|
| Category | Citation of document with indication, where appropriate, of relevant passages | Relevant to claim | |
| | US - A - 1 419 689 (PORTER) <br><br> * Page 2, lines 26-45; page 2, lines 78-92 * <br><br> --- <br><br> DE - A - 1 482 913 (TORO) <br><br> * Page 29, line 5 to page 30, line 18 * <br><br> --------- | 11 <br><br><br><br><br><br> 12 | |
| | | | TECHNICAL FIELDS SEARCHED (Int. Cl.³) |

EPO Form 1503.2   06.78